# FASCICULE DE BREVET EUROPEEN

(11) **EP 1 954 385 B1**
(45) Date de publication et mention de la délivrance du brevet: **16.06.2010**
(21) Numéro de dépôt: 06842032.2
(22) Date de dépôt: 23.11.2006
(51) Int. Cl.: B01J 8/00, C01B 3/02

(54) **GÉNÉRATEUR D'HYDROGÈNE ET PILE À COMBUSTIBLE METTANT EN OEUVRE UN TEL GÉNÉRATEUR**
WASSERSTOFFGENERATOR UND BRENNSTOFFZELLE
HYDROGEN GENERATOR AND FUEL CELL USING SAME

(30) Priorité: 24.11.2005 FR 0553587
(43) Date de publication de la demande: 13.08.2008
(73) Titulaire: Commissariat à l'énergie atomique et aux énergies alternatives, 75015 Paris (FR)
(72) Inventeur: LAURENT, Jean-Yves, 38420 Domene (FR); GAILLARD, Frédéric, 38500 Voiron (FR); CAPRON, Philippe, 38200 Luzinay (FR); LOCATELLI, Denis, 38430 Moirans (FR)
(74) Mandataire: Vuillermoz, Bruno
(86) Numéro de dépôt international: PCT/FR2006/051221
(87) Numéro de publication internationale: WO 2007/060369

(56) Documents cités:
- WO-A-02/30810
- WO-A-2005/005311
- WO-A-2005/102914
- US-A- 4 261 955
- US-A- 4 261 956

## Description

### DOMAINE DE L'INVENTION

La présente invention se rapporte à la réalisation de dispositifs pour générer de l'hydrogène, en particulier pour générer de l'hydrogène gazeux. De manière connue, une telle production peut être réalisée par une réaction d'hydrolyse d'un borohydrure.

Cette invention trouve notamment application en tant que générateur pour les piles à combustible de type PEMFC (pour *« Proton Exchange Membrane Fuel Cells* »). Plus particulièrement dans le cadre de cette application, la présente invention concerne les piles à combustible destinées à l'alimentation électrique d'appareils électriques ou électroniques portables, c'est-à-dire d'appareils nécessitant une puissance électrique faible. Cette invention peut cependant trouver application pour alimenter en hydrogène des piles à combustible de puissances supérieures.

### ETAT ANTERIEUR DE LA TECHNIQUE

Les piles à combustible représentent une source d'énergie non polluante et alternative à la combustion d'hydrocarbures, en particulier pour les automobiles. Une pile à combustible est une pile dans laquelle l'électricité est générée par l'oxydation d'un combustible réducteur, par exemple l'hydrogène, sur une électrode, couplée à la réduction d'un oxydant, tel que l'oxygène de l'air, sur l'autre électrode. Il est possible d'accélérer la réaction d'oxydation de l'hydrogène au moyen d'un catalyseur qui contient généralement un élément métallique.

Cependant, dans le cas des piles à combustibles utilisant de l'hydrogène, produit extrêmement inflammable, l'un des principaux obstacles réside dans la production et/ou le stockage de ce combustible. C'est pourquoi, les choix technologiques s'orientent actuellement vers des combustibles liquides directement oxydés à l'anode de la pile ou vers des combustibles, liquides ou solides, susceptibles de générer de l'hydrogène « à la demande », c'est-à-dire grâce auxquels la quantité d'hydrogène générée équivaut à la quantité d'hydrogène consommée par la pile.

L'un des modes connus de production d'hydrogène consiste à hydrolyser des borohydrures se présentant sous forme solide, comme le borohydrure ou tétrahydroborate de sodium NaBH₄, mis en solution et mis en contact avec une matière catalytique à l'état solide. La réaction d'hydrolyse du borohydrure de sodium s'opère sous certaines conditions selon le schéma réactionnel suivant :

M(BH₄)ₙ + 2nH₂O → M[B(OH)₄]ₙ + 4nH₂

où M représente un élément alcalin ou alcalinoterreux et n est un nombre entier positif égal au nombre d'électrons de valence de l'élément M. Cet élément M peut par exemple être du sodium (Na), auquel cas le nombre n est égal à 1, ce qui conduit au schéma réactionnel suivant :

NaBH₄ + 2H₂O → NaB(OH)₄ + 4H₂.

Néanmoins, l'élément M pourrait être constitué par du potassium (K), du lithium (Li) ou un autre élément approprié.

Cette réaction d'hydrolyse d'un borohydrure présente l'avantage de mettre en jeu des réactifs et des résidus qui sont inoffensifs, c'est-à-dire non toxiques et non polluants, contrairement par exemple aux réactions mises en jeu dans les piles de type DMFC (pour *« Direct Methanol Fuel Cell* ») ou FAFC (pour *« Formic Acid Fuel Cell* »), qui utilisent respectivement du méthanol ou de l'acide formique comme combustible.

Selon ce schéma réactionnel, le borohydrure de sodium, couramment utilisé, génère quatre moles d'hydrogène en réagissant avec deux moles d'eau.

Dans le but d'améliorer le rendement de la réaction d'hydrolyse, certains réacteurs de l'art antérieur mettent en oeuvre des borohydrures sous forme solide, par exemple à l'état divisé, c'est-à-dire sous forme pulvérulente. L'hydrogène est alors généré par mise en contact de borohydrure solide avec une solution aqueuse contenant de préférence une matière catalytique.

Cependant, ce type de générateur d'hydrogène présente des inconvénients qui compliquent son utilisation. Il s'avère ainsi difficile de contrôler la réaction entre du borohydrure solide et une solution aqueuse et, partant, le débit d'hydrogène généré. En effet, cette réaction hétérogène, c'est-à-dire mettant en jeu des réactifs à l'état liquide et à l'état solide, est difficile à contrôler, car elle nécessite des mécanismes de diffusion de l'eau vers le borohydrure.

Or ces mécanismes de diffusion dépendent fortement de la porosité du milieu réactif et celle-ci varie au cours de l'avancement de la réaction d'hydrolyse du fait de la formation de sous-produits plus ou moins compacts. Ainsi, il s'avère délicat de contrôler la cinétique de la réaction d'hydrolyse dans le cas des dispositifs décrits par les documents US-2002-182459, WO-A-2005/102914, US-4261956, US-4261955, qui prévoient la mise en contact des réactifs par diffusion à travers une membrane poreuse. Une telle membrane est en effet sujette à obstruction par les produits de réaction compacts, tel que le composé NaB(OH)₄.

De plus, ces sous-produits de réaction occasionnent fréquemment l'obstruction de la canalisation d'amenée d'eau dans le réacteur contenant le borohydrure solide. Par conséquent, la cinétique de la réaction est susceptible de fluctuer en fonction de l'importance de cette obstruction de l'arrivée d'eau. Pour éviter l'ajout d'équipements lourds et onéreux solutionnant ce problème, il est nécessaire d'optimiser la génération d'hydrogène en maîtrisant au mieux la réaction.

Par ailleurs, les documents WO02/30810 et US2001/045364 décrivent des générateurs d'hydrogène dans lesquels les réactions d'hydrolyse sont contrôlées de manière imprécise, car les réactifs sont mis en contact en de nombreux points, si bien que les réactions se déclenchent et se déroulent toutes à peu près simultanément au niveau d'une grande surface d'échange réactionnel.

### EXPOSE DE L'INVENTION

L'objectif de la présente invention est de proposer un générateur d'hydrogène ne présentant pas les inconvénients de l'art antérieur. La présente invention a donc pour objet un dispositif pour générer de l'hydrogène par hydrolyse d'un hydrure permettant de mieux contrôler la cinétique de réaction, donc le débit d'hydrogène généré, en évitant les risques d'obstruction de l'arrivée d'eau.

La présente invention concerne ainsi un dispositif pour générer de l'hydrogène par hydrolyse d'un hydrure, comprenant :
- un réacteur contenant l'hydrure sous forme solide, à l'état divisé ou non, et comportant au moins un orifice destiné à l'évacuation de l'hydrogène produit,
- des moyens de libération de l'eau nécessaire à la réaction d'hydrolyse,
- au moins une enveloppe apte à isoler l'hydrure de l'eau nécessaire à la réaction d'hydrolyse, ladite enveloppe étant constituée d'un matériau consommable.

Selon l'invention, cette enveloppe est apte à mettre en contact l'eau et l'hydrure en un lieu susceptible de servir de siège à la réaction d'hydrolyse et de se déplacer au sein du réacteur au fur et à mesure de la consommation du matériau constitutif de l'enveloppe par les produits de la réaction d'hydrolyse.

Autrement dit, un matériau consommable, c'est-à-dire soluble ou dispersible, protège temporairement l'hydrure en le, séparant de l'eau, ce matériau consommable disparaissant au cours de la réaction. Par enveloppe, on désigne un (ou plusieurs) matériau qui entoure et recouvre l'un des réactifs. Cette définition relève donc directement du sens commun du terme « enveloppe ».

Selon un premier mode de réalisation de l'invention, le réacteur comporte en outre au moins un orifice qui coïncide avec le passage d'une canalisation formée par cette enveloppe et destinée à acheminer l'eau au sein du réacteur.

En d'autres termes, le tuyau d'amenée d'eau est inséré dans le réacteur et il est dissout par les produits de la réaction d'hydrolyse au fur et à mesure de la propre consommation de l'hydrure ; ce tuyau se raccourcit donc au fur et à mesure de l'avancement de cette réaction.

Selon un deuxième mode de réalisation de l'invention, le réacteur contient la quantité d'eau nécessaire à l'hydrolyse de l'intégralité de l'hydrure qu'il renferme. Cette eau est séparée dudit hydrure par l'enveloppe réalisée en matériau consommable. Cependant, cette enveloppe ne renferme pas l'eau mais l'hydrure, et de plus, elle est, avant toute utilisation du dispositif, majoritairement recouverte par une gaine réalisée en une matière dispersible mais non soluble dans l'eau. En d'autres termes, la gaine imperméabilise l'enveloppe immergée et la protège contre une dissolution prématurée.

En pratique, cette enveloppe peut être en forme de cylindre ou de cône, à base circulaire ou polygonale. De telles formes conviennent pour former une arrivée d'eau à débit contrôlé et pour prévoir la durée de consommation de l'enveloppe présentant une forme ainsi déterminée. Ces formes permettent donc de contrôler précisément le débit d'hydrogène.

Selon une forme de réalisation particulière de l'invention, le générateur d'hydrogène présente une pluralité d'enveloppes, de géométrie semblables ou non, et réparties dans le réacteur. Cela permet d'améliorer encore davantage le contrôle de la réaction d'hydrolyse en multipliant les arrivées d'eau à débit contrôlé au sein du réacteur.

Avantageusement, l'hydrure est sélectionné dans le groupe comprenant le tétrahydroborate de sodium (NaBH₄), le tétrahydroborate de magnésium (Mg(BH₄)₂) et l'hydrure de lithium (LiH). Ces trois composés donnent des résidus de réactions non polluants. Ils présentent une forte capacité de génération d'hydrogène. Le tétrahydroborate de sodium NaBH₄ est en outre le plus avantageux, car facile à produire et peu coûteux.

L'hydrure peut également être choisi dans le groupe comprenant LiBH₄, Al(BH₄)₃, Be(BH₄)₂, MgH₂, CaH₂, Ca(AlH₄)₂, Zr(BH₄)₃, Ca(BH₄)₂, NaAlH₄, KBH₄, LiAlH₄.

En pratique, le matériau consommable constituant l'enveloppe de l'invention peut être constitué d'un matériau métallique se corrodant ou d'un matériau organique se dégradant en présence d'un milieu basique. Ainsi, au cours de l'hydrolyse de l'hydrure, ce matériau est consommé du fait de la génération concomitante d'ions hydroxydes.

Ce matériau organique peut être choisi parmi les polyamides, les polycarbonates, le PET (polyéthylène téréphtalate), les polyesters, le PVDF (polyfluorure de vinylidène), le PBT (polybutyle téréphtalate).

De manière avantageuse, ce matériau peut être un matériau dont la dissolution sous l'action desdits produits de réaction produit également de l'hydrogène. Cette deuxième réaction de production d'hydrogène augmente la quantité totale d'hydrogène produit dans le réacteur, permettant ainsi d'améliorer le rapport de l'hydrogène produit sur le poids du générateur.

En pratique, ce matériau peut être l'aluminium ou un alliage d'aluminium. L'aluminium est en effet corrodé par les ions hydroxydes produits par la réaction d'hydolyse, ce qui produit de l'hydrogène et de l'alumine selon la réaction suivante :

2 Al + 6 OH → Al₂O₃ + 3 H₂

Outré la génération d'hydrogène supplémentaire, cette réaction présente l'avantage d'abaisser le pH en consommant des ions hydroxydes, lesquels ralentiraient la réaction principale d'hydrolyse de l'hydrure.

Selon une forme de réalisation particulière de l'invention, un catalyseur est introduit dans le réacteur, sous forme d'un sel dissous dans l'eau ou sous forme de particules solides réparties dans l'hydrure. Ce catalyseur permet d'augmenter le rendement de réaction et son ajout directement dans l'un des réactifs en présence évite son introduction spécifique dans le réacteur, simplifiant ainsi la mise en oeuvre du générateur.

En particulier, l'élément constitutif de ce catalyseur peut être sélectionné dans le groupe comprenant le ruthénium (Ru), le platine (Pt), le cobalt (Co), le palladium (Pd), le nickel (Ni), le fer (Fe), l'or (Au), l'argent (Ag), le manganèse (Mn), le rhénium (Re), le rhodium (Rh), le titane (Ti), le vanadium (V) et le cérium (Ce). Lorsqu'un ou plusieurs de ces métaux sont utilisés pour former les particules de catalyseur, il est possible d'atteindre de bons rendements de réaction de genèse d'hydrogène par hydrolyse d'un hydrure.

Selon une forme de réalisation pratique de l'invention, les quantités d'hydrure et d'eau au sein du réacteur sont sélectionnées et l'enveloppe caractéristique de l'invention est dimensionnée de manière à produire un débit d'hydrogène déterminé.

La présente invention concerne également une pile à combustible comprenant un électrolyte, une anode et une cathode, dont l'oxydant est de l'oxygène (O₂) et le réducteur de l'hydrogène (H₂) produit par hydrolyse. Selon l'invention, cette pile comprend un dispositif pour générer de l'hydrogène par hydrolyse d'un hydrure, tel que précédemment décrit.

L'invention apparaîtra plus clairement à la lumière de la description des modes de réalisation particuliers suivants. L'objet de l'invention ne se limite cependant pas à ces modes de réalisation particuliers et d'autres modes de réalisation de l'invention sont possibles.

### BREVE DESCRIPTION DES FIGURES

La figure 1 est une représentation schématique d'un système comprenant une pile à combustible destinée à alimenter un appareil électronique portable.
Les figures 2a, 2b et 2c sont des représentations schématiques de différents états d'un dispositif conforme à une première forme de réalisation de l'invention.
La figure 3 est une représentation schématique d'un dispositif conforme à une deuxième forme de réalisation de l'invention

### MODES DE REALISATION DE L'INVENTION

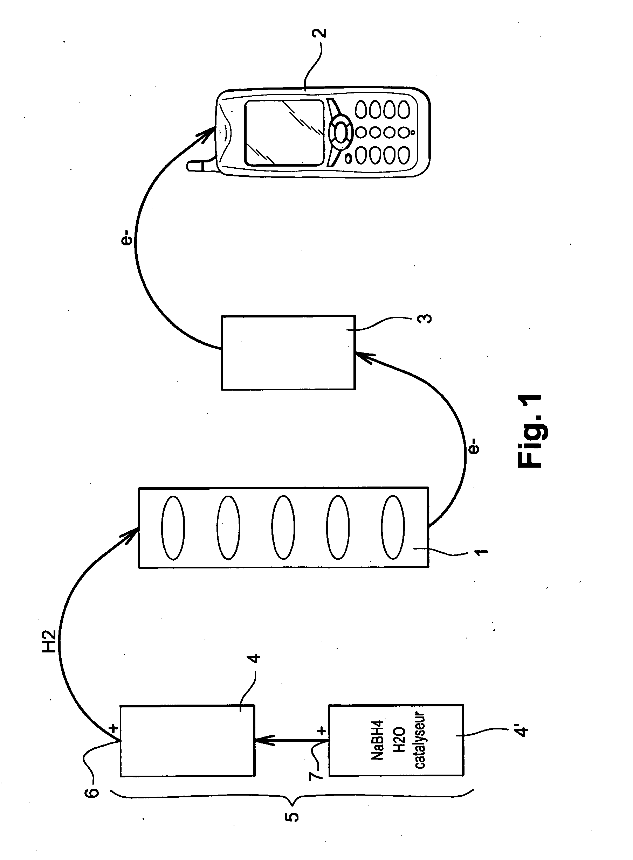

La figure 1 illustre donc une représentation schématique d'un système comprenant une pile à combustible **1** - objet de l'invention - destinée à alimenter un appareil électronique portable, en l'occurrence un téléphone portable **2**. L'alimentation se fait par l'intermédiaire d'une batterie **3** dite tampon, apte à stabiliser le courant électrique délivré au téléphone portable **2**. La pile à combustible **1** comprend de façon classique un électrolyte, une anode et une cathode. Elle met en jeu de l'oxygène gazeux (O₂) comme oxydant et, comme réducteur, de l'hydrogène gazeux (H₂) produit au moyen d'un générateur **5** conforme à la présente invention. La pile ainsi décrite peut en particulier alimenter des appareils de faibles puissances, c'est-à-dire typiquement comprise entre 1 W et 100 W.

Dans l'exemple de la figure 1, le générateur **5** comprend une réserve des combustibles **4**' que l'on vient connecter, par l'intermédiaire d'un raccord rapide présentant deux pièces complémentaires **6** et **7**, dans un logement adéquat **4** prévu au niveau de la pile **1**.

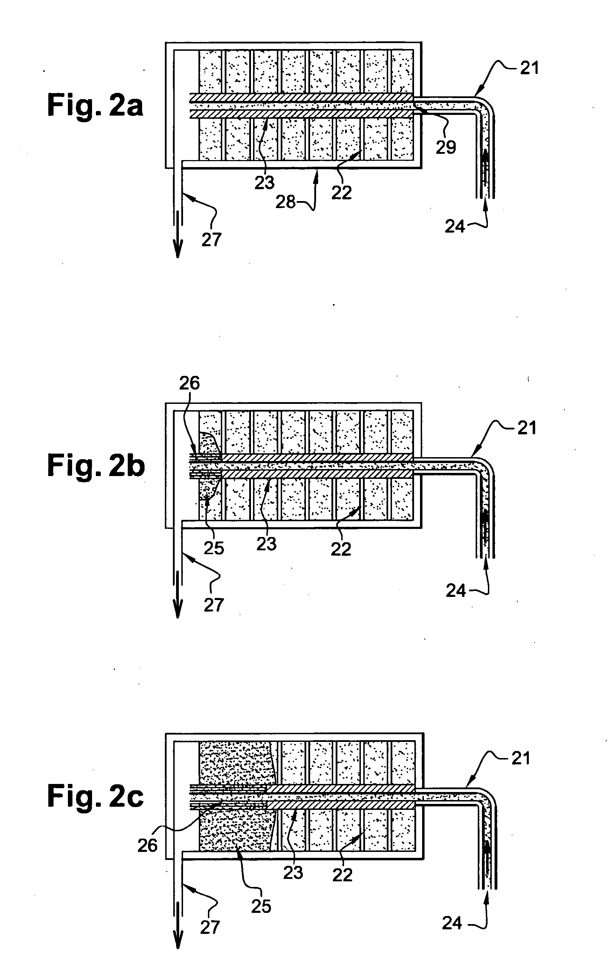

Les figures 2a à 2c illustrent une première forme de réalisation de l'invention. Conformément à celle-ci, ce générateur comprend un réacteur **28**, dont le corps abrite le siège de la réaction de production d'hydrogène. Ce corps de réacteur **28** présente un orifice **27** destiné à permettre l'évacuation de l'hydrogène gazeux produit. Sur cet orifice **27**, on peut monter une conduite de transport de l'hydrogène jusqu'à la pile à combustible **1**.

Le corps de réacteur **28** contient du borohydrure de sodium **22** sous forme solide à l'état de poudre agglomérée. Le borohydrure de sodium NaBH₄ occupe ici la majeure partie du volume du corps de réacteur **28**, laissant libre l'orifice **27** pour évacuation de l'hydrogène produit par la réaction d'hydrolyse.

Il est également possible, sans sortir du cadre de l'invention, d'utiliser un borohydrure d'un autre élément alcalin ou alcalino-terreux, tel que le magnésium (Mg) (formule Mg(BH₄)₂). Ces composés permettent d'atteindre un rendement élevé pour la réaction de genèse d'hydrogène. En outre, l'emploi de ces borohydrures ne nécessite pas de mesure de sécurité particulière, puisque ils sont inoffensifs, c'est-à-dire qu'ils ne polluent pas et qu'ils sont non toxiques.

Pour augmenter le rendement de la réaction d'hydrolyse, un catalyseur est introduit dans le réacteur **28** sous forme d'un sel dissous dans l'eau de la réaction. Il est aussi possible d'introduire le catalyseur sous forme de particules solides réparties dans l'hydrure **22**. L'ajout du catalyseur directement dans l'un des réactifs en présence évite l'introduction séparée de celui-ci dans le réacteur, simplifiant de fait la mise en oeuvre du générateur.

Ce catalyseur peut être sélectionné dans le groupe comprenant le ruthénium (Ru), le platine (Pt), le cobalt (Co), le palladium (Pd), le nickel (Ni), le fer (Fe), l'or (Au), l'argent (Ag), le manganèse (Mn), le rhénium (Re), le rhodium (Rh), le titane (Ti), le vanadium (V) et le cérium (Ce).

Par ailleurs, le dispositif objet de l'invention comprend des moyens de libération de l'eau **24** nécessaire à la réaction d'hydrolyse, ces moyens permettant d'amener l'eau **24** au sein du réacteur **28**. Dans l'exemple de la figure 2, ces moyens sont constitués par une conduite **21** d'amenée d'eau **24** contrôlée par une vanne non représentée. Cette conduite **21** débouche, par l'intermédiaire d'un orifice **29** ménagé dans une paroi du réacteur **28**, sur une canalisation **23**, dont l'une des fonctions est d'acheminer l'eau **24** jusqu'au siège de la réaction d'hydrolyse.

Cette canalisation **23** est formée par une enveloppe cylindrique à base circulaire. Cette enveloppe cylindrique permet d'isoler l'eau **24** convoyée de l'hydrure **22** contenu dans le réacteur **28**, sauf au niveau du siège prévu pour la réaction d'hydrolyse. En effet, par définition, l'enveloppe ou canalisation **23** entouré, recouvre et « protège » l'un des réactifs, en l'occurrence l'eau **24**. La canalisation **23** présente donc une forme creuse pour contenir et entourer l'hydrure **22**.

En l'occurrence, l'enveloppe formant la canalisation **23** est réalisée en aluminium. Ce métal est connu pour se corroder en milieu basique, milieu justement obtenu par la réaction d'hydrolyse de l'hydrure. En effet, la réaction d'hydrolyse produit des ions hydroxydes (OH⁻). Ainsi, le pH résultant de ladite réaction d'hydrolyse peut atteindre environ la valeur de 11.

Or, lorsque l'aluminium se corrode et se dissout sous l'action des ions hydroxydes, cela produit de l'alumine mais également de l'hydrogène, selon la réaction suivante :

2 Al + 6OH⁻ →Al₂O₃ + 3H₂.

Par conséquent, cette réaction « secondaire » de production d'hydrogène augmente la quantité totale d'hydrogène produit dans le réacteur et améliore d'autant le rapport de l'hydrogène produit sur le poids du générateur, en quelque sorte le « rendement massique » de la réaction.

En outre, cette réaction présente l'avantage d'abaisser le pH au niveau du siège de la réaction en consommant des ions hydroxydes, lesquels ralentiraient la réaction principale d'hydrolyse de l'hydrure. Cette consommation d'ions hydroxydes dans la corrosion de l'aluminium évite donc les fluctuations dans la production d'hydrogène dues à l'abaissement pH.

Au niveau de la structure du générateur, cette corrosion de l'aluminium a pour conséquence la consommation progressive de l'enveloppe formant la canalisation **23**. Ainsi, selon une caractéristique de l'invention, cette enveloppe libère l'eau **24** nécessaire à l'hydrolyse de manière localisée et progressive.

Tout d'abord, cette libération d'eau **24** est « localisée » car elle n'intervient qu'à l'extrémité **26** de la canalisation **23**, dont la position au sein du réacteur varie au fur et à mesure de la consommation d'aluminium précédemment décrite. En d'autres termes, l'adjectif « localisée » désigne une surface d'échange réactionnel relativement restreinte, eu égard notamment à la longueur de l'enveloppe **23**.

En pratique, la localisation de la libération de l'eau **24** varie au sein du réacteur **28**, mais, du fait de la consommation de la canalisation, la libération de l'eau **24** est toujours localisée dans la zone où se déroule la réaction d'hydrolyse, c'est à dire au fur et à mesure de la consommation de l'hydrure. Par conséquent et à la différence des dispositifs de l'art antérieur, la canalisation **23** ne peut pas être obstruée par les produits **25** issus de la réaction d'hydrolyse, qui ont une consistance parfois compacte.

Ensuite, cette libération d'eau **24** est progressive car elle résulte de la consommation progressive de l'enveloppe par les produits de la réaction d'hydrolyse. L'enveloppe est ainsi consommée au fur et à mesure de la production d'ions hydroxydes par la réaction d'hydrolyse. Par conséquent, son extrémité **26** se déplace progressivement avec le siège de la réaction vers des zones où l'hydrure **22** n'a pas encore été hydrolysé.

L'enveloppe **23** est dimensionnée pour faire correspondre sa propre consommation par corrosion avec l'hydrolyse de l'hydrure. A titre exemplatif, il convient de prévoir une durée de 3 heures environ pour corroder à moitié les parois de 50 µm d'épaisseur d'un tube en aluminium.

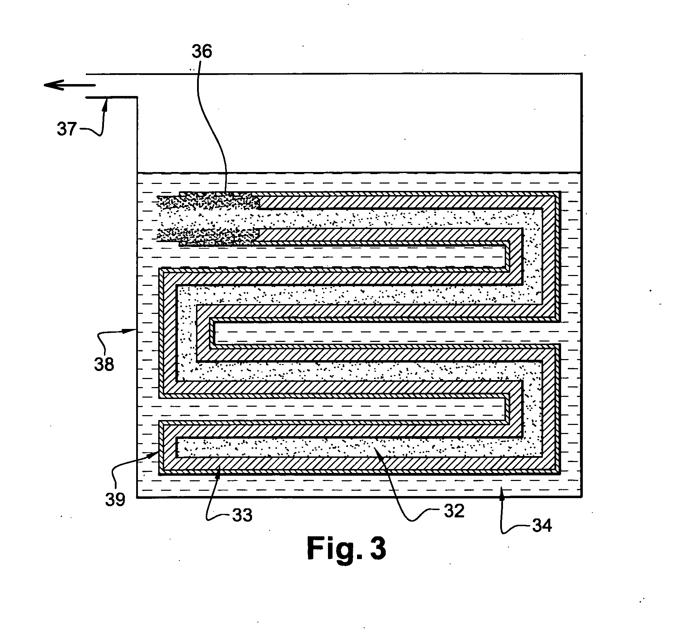

La figure 3 illustre un mode de réalisation alternatif de l'invention, dans lequel l'eau n'est plus amenée de l'extérieur du réacteur **38**, mais directement contenue dans le réacteur **38**. Comme dans le premier mode de réalisation, l'eau est isolée de l'hydrure **32** par une enveloppe **33**, sauf localement au niveau du siège prévu pour le démarrage de la réaction d'hydrolyse. Cependant, exceptée cette partie non couverte, l'hydrure **32** est ici contenu dans cette enveloppe **33**, contrairement au mode de réalisation illustré par les figures 2a à 2c.

Tout comme dans le mode de réalisation précédent, l'enveloppe isolante est réalisée en aluminium. Elle se corrode progressivement et de manière localisée à l'instar de celle formant la canalisation **2**3 au fur et à mesure de la réaction d'hydrolyse. Dans cette forme de réalisation, cette canalisation **33** adopte la forme d'un serpentin, afin de localiser de manière la plus efficace le lieu du siège de la réaction d'hydrolyse, au fur et à mesure de sa progression. La réaction de corrosion de l'aluminium formant le serpentin présente les mêmes caractéristiques et avantages que ceux décrits en relation avec le mode de réalisation précédent.

Pour localiser cette réaction à l'endroit voulu, ici au niveau de l'une des extrémités **36** du serpentin, une gaine **39** est déposée sur la majeure partie de l'enveloppe **33** en aluminium. Cette gaine **39** est constituée d'une couche réalisée en une matière passive vis-à-vis de l'eau. On entend par passive, une matière qui ne réagit pas et demeure intègre au contact de l'eau ; la gaine est donc insoluble dans l'eau. Cette gaine **39** « protège » ainsi l'enveloppe **33** contre la corrosion au niveau des lieux où elle est déposée, en l'imperméabilisant. Par conséquent, au début de la réaction, l'enveloppe **33** se corrode de manière localisée limitativement au niveau de l'extrémité **36** où elle n'est pas couverte par la gaine **39** et où elle ne couvre pas l'hydrure **32**. L'enveloppe **33** immergée est donc « protégée » contre une dissolution prématurée, c'est-à-dire plus rapide que prévu.

L'enveloppe **33** est donc majoritairement recouverte par la gaine **39** et l'ensemble qu'elles constituent est immergé dans l'eau. Lorsque l'enveloppe **33** entre en contact avec l'eau **34**, ici au niveau de son extrémité **36**, la réaction d'hydrolyse se déroule comme précédemment décrit.

Contrairement au premier mode de réalisation décrit, dans lequel l'arrivée d'eau est contrôlée, dans cette forme de réalisation, l'eau est introduite dans sa totalité, ce qui induit le démarrage de la réaction d'hydrolyse.

Cette réaction se poursuit alors de façon contrôlée par la structure choisie pour l'hydrure, sans s'arrêter. Cependant, pour éviter l'obstruction de la gaine **39** par les produits compacts issus de cette réaction, la gaine **39** est formée d'une couche suffisamment fine pour la rendre dispersible dans l'eau **34** en l'absence du support solide que constitue l'enveloppe **33**. Ainsi, au fur et à mesure que l'enveloppe **33** est corrodée, la gaine **39** perd son armature et, partant, se disperse dans l'eau en petites particules. Ces particules ne sont pas dissoutes car la matière qui constitue la gaine **39** est insoluble dans l'eau, comme indiqué ci-dessus. L'épaisseur de la gaine **39** représente donc un compromis entre la fonction d'imperméabilisation de l'enveloppe **33** et la nécessaire dispersion de la gaine **39** dans le liquide contenu dans le réacteur **38**.

Ainsi, conformément à l'invention, l'eau **34** entre en contact avec l'hydrure de manière localisée et progressive, la progression résultant de la consommation du matériau constitutif de cette enveloppe **33** par les produits de la réaction d'hydrolyse.

Une fois la réaction d'hydrolyse initialisée, elle s'auto gère par la disparition de l'enveloppe **33** et ne s'arrête que lorsque la gaine ou l'hydrure sont complètement consommés.

L'enveloppe **33** est ici en forme de cylindre à base circulaire dont la génératrice est incurvée, de manière à former une sorte de « serpentin », augmentant ainsi la compacité du dispositif.

Par ailleurs et comme dans le premier mode de réalisation, il est avantageux d'introduire un catalyseur dans l'eau **34** ou dans l'hydrure **32**, de manière à augmenter le rendement de la réaction d'hydrolyse.

Dans l'exemple des figures 2a à 2c et 3, les enveloppes formant la canalisation **23** ou le serpentin **33** sont en forme de cylindre à base circulaire, mais elles pourraient également être coniques et/ou à section polygonale.

En outre, si une seule enveloppe **23**, **33** a été représentée respectivement sur les figures 2a à 2c et 3, le dispositif peut en comporter plusieurs, présentant des géométries semblables ou non et réparties dans le réacteur. Cela permet d'améliorer encore le contrôle de la réaction en multipliant les arrivées d'eau contrôlables au sein du réacteur. De même, on pourrait envisager d'immerger plusieurs « serpentins » dans le réacteur **38**.

Pour ces enveloppes **23**, **33**, le choix de leur nombre, de leurs géométries et de leurs positions dans un réacteur particulier dépend de la progression de la réaction d'hydrolyse souhaitée, en fonction de la durée totale de production d'hydrogène prévue pour ce générateur. De même, il s'avère avantageux de sélectionner les quantités d'hydrure **22**, **32** et d'eau **24**, **34** mises en présence au sein du réacteur **28**, **38** de manière à produire le débit d'hydrogène déterminé pendant une durée souhaitée.

Ainsi, pour obtenir un débit régulier d'hydrogène, on peut prévoir de réaliser des serpentins en hydrure allongés et de section orthogonale de superficie constante. Comme on le comprend aisément à l'observation des figures, en particulier de la comparaison entre les figures 2 b et 2 c, la forme de l'hydrure dans son enveloppe sert de support au déplacement du siège de la réaction d'hydrolyse. C'est pourquoi cette forme est avantageusement allongée ou « grêle », de façon à réaliser une hydrolyse progressive de l'hydrure.

## Revendications

1. Dispositif pour générer de l'hydrogène par hydrolyse d'un hydrure comprenant :
- un réacteur (28, 38) contenant l'hydrure (22, 32) sous forme solide, à l'état divisé ou non, et comportant au moins un orifice (27, 37) destiné à l'évacuation de l'hydrogène produit ;
- des moyens de libération de l'eau (24, 34) nécessaire à la réaction d'hydrolyse ;
- au moins une enveloppe (23, 33) apte à isoler l'hydrure (22, 32) de l'eau (24, 34) nécessaire à la réaction d'hydrolyse, ladite enveloppe (23, 33) étant constituée d'un matériau consommable ;
***caractérisé* en ce que** ladite enveloppe (23, 33), soluble ou dispersible, entoure et recouvre l'eau (24, 34) ou l'hydrure (22, 32) et est constituée d'un matériau qui est consommé par les produits de la réaction d'hydrolyse, de sorte que le lieu de la mise en contact entre l'eau (24, 34) et l'hydrure (22, 32), susceptible de servir de siège à ladite réaction d'hydrolyse, se déplace au sein dudit réacteur (28, 38) au fur et à mesure de la consommation dudit matériau.

2. Dispositif pour générer de l'hydrogène selon la revendication 1, ***caractérisé* en ce que** l'hydrure (22, 32) est sélectionné dans le groupe comprenant le tétrahydroborate de sodium NaBH₄, le tétrahydroborate de magnésium Mg(BH₄)₂, le tétrahydroborate de lithium LiBH₄, le tétrahydroborate d'aluminium Al(BH₄)₃, le tétrahydroborate de béryllium Be(BH₄)₂, le tétrahydroborate de zirconium Zr(BH₄)₃, le tétrahydroborate de calcium Ca(BH₄)₂, le tétrahydroborate de potassium KBH₄, et les hydrures LiH, MgH₂, CaH₂, Ca(AlH₄)₂, NaAlH₄, LiAlH₄.

3. Dispositif pour générer de l'hydrogène selon l'une des revendications 1 et 2, ***caractérisé* en ce que** le matériau constitutif de l'enveloppe (23, 33) est un matériau métallique se corrodant en présence d'un milieu basique.

4. Dispositif pour générer de l'hydrogène selon l'une des revendications 1 et 2, ***caractérisé* en ce que** le matériau constitutif de l'enveloppe (23, 33) est un matériau organique se dégradant en présence d'un milieu basique.

5. Dispositif pour générer de l'hydrogène selon la revendication 4, ***caractérisé* en ce que** le matériau organique est choisi dans le groupe comprenant les polyamides, les polycarbonates, le PET (polyéthylène téréphtalate), les polyesters, le PVDF (polyfluorure de vinylidène), le PBT (polybutyle téréphtalate).

6. Dispositif pour générer de l'hydrogène selon l'une des revendications précédentes, ***caractérisé* en ce que** le matériau constitutif de l'enveloppe (23, 33) est un matériau dont la dissolution sous l'action des produits de la réaction d'hydrolyse produit également de l'hydrogène.

7. Dispositif pour générer de l'hydrogène selon la revendication 6, ***caractérisé* en ce que** ledit matériau est l'aluminium ou un alliage d'aluminium.

8. Dispositif pour générer de l'hydrogène selon l'une des revendications précédentes, ***caractérisé* en ce qu'**un catalyseur est introduit dans le réacteur (28, 38) sous forme d'un sel dissous dans l'eau (24, 34) ou sous forme de particules solides réparties dans l'hydrure (22, 32).

9. Dispositif pour générer de l'hydrogène selon la revendication 8, ***caractérisé* en ce que** l'élément constitutif du catalyseur est sélectionné dans le groupe comprenant le cobalt (Co), le ruthénium (Ru) et le platine (Pt), le palladium (Pd), le nickel (Ni), le fer (Fe), l'or (Au), l'argent (Ag), le manganèse (Mn), le rhénium (Re), le rhodium (Rh), le titane (Ti), le vanadium (V) et le cérium (Ce).

10. Dispositif pour générer de l'hydrogène selon l'une des revendications 1 à 9, ***caractérisé* en ce que** le réacteur (28, 38) comporte en outre au moins un orifice (29) qui coïncide avec une canalisation formée par l'enveloppe (23) de manière à acheminer l'eau (24) au sein du réacteur (28).

11. Dispositif pour générer de l'hydrogène selon l'une des revendications 1 à 9, ***caractérisé* en ce que** le réacteur (38) contient de l'eau (34), **en ce que** l'enveloppe (33) contient l'hydrure (32), ladite enveloppe (33) étant, avant toute utilisation du dispositif, majoritairement recouverte par une gaine (39) réalisée en une matière dispersible mais non soluble dans l'eau (34), l'ensemble constitué par la gaine (39) et par l'enveloppe (33) étant immergée dans l'eau (34).

12. Dispositif pour générer de l'hydrogène selon l'une des revendications 1 à 11, ***caractérisé* en ce que** l'enveloppe (23, 33) est en forme de cylindre ou de cône, à base circulaire ou polygonale.

13. Dispositif pour générer de l'hydrogène selon l'une des revendications 1 à 12, ***caractérisé* en ce que** l'enveloppe (23, 33) présente une forme allongée et creuse à l'instar d'une canalisation.

14. Dispositif pour générer de l'hydrogène selon l'une des revendications 1 à 13, ***caractérisé* en ce qu'**il comporte une pluralité d'enveloppes (23, 33) présentant des géométries semblables ou non et réparties dans le réacteur (28, 38).

15. Pile à combustible comprenant un électrolyte, une anode et une cathode, dont l'oxydant est de l'oxygène (O₂), et le réducteur de l'hydrogène (H₂) produit par hydrolyse, ***caractérisée* en ce qu'**elle comprend un dispositif (5) pour générer de l'hydrogène par hydrolyse d'un hydrure (22, 32) selon l'une des revendications précédentes.

## Claims

1. Device for generating hydrogen by hydrolysis of a hydride comprising:
- a reactor (28, 38) containing the hydride (22, 32) in solid form, in the divided state or not, and comprising at least one orifice (27, 37) for removing the hydrogen produced;
- means for releasing the water (24, 34) required for the hydrolysis reaction;
- at least one envelope (23, 33) suitable for isolating the hydride (22, 32) from the water (24, 34) required for the hydrolysis reaction, the said envelope (23, 33) being made from a consumable material;
***characterized* in that** the said envelope (23, 33), being soluble or dispersable; surrounds and recovers the water (24, 34) or the hydride (22, 32) and is made of a material which is consumed by the products of hydrolysis reaction, such that the site of contact of water with hydride, capable of serving as the seat of the said hydrolysis reaction, moves in the said reactor (28, 38) as the material constituting the said envelope (23, 33) is consumed.

2. Hydrogen generating device according to Claim 1, ***characterized* in that** the hydride (22, 32) is selected from the group comprising sodium tetrahydroborate NaBH₄, magnesium tetrahydroborate Mg(BH₄)₂, lithium tetrahydroborate LiBH₄, aluminium tetrahydroborate Al(BH₄)₃, beryllium tetrahydroborate Be(BH₄)₂, zirconium tetrahydroborate Zr(BH₄)₃, calcium tetrahydroborate Ca(BH₄)₂, potassium tetrahydroborate KBH₄, and the hydrides LiH, MgH₂, CaH₂, Ca(AlH₄)₂, NaAlH₄, LiAlH₄.

3. Hydrogen generating device according to either of Claims 1 and 2, ***characterized* in that in that** the material constituting the envelope (23, 33) is a metallic material that corrodes in the presence of a basic medium.

4. Hydrogen generating device according to either of Claims 1 and 2, ***characterized* in that in that** the material constituting the envelope (23, 33) is an organic material that is degraded in the presence of a basic medium.

5. Hydrogen generating device according to Claim 4, ***characterized* in that** the organic material is selected from the group comprising polyamides, polycarbonates, PET (polyethylene terephthalate), polyesters, PVDF (polyvinylidene fluoride), PBT (polybutyl terephthalate).

6. Hydrogen generating device according to one of the preceding claims, ***characterized* in that** the material constituting the envelope (23, 33) is a material whereof the dissolution under the action of the hydrolysis reaction products also produces hydrogen.

7. Hydrogen generating device according to Claim 6, ***characterized* in that** the said material is aluminium or an aluminium alloy.

8. Hydrogen generating device according to one of the preceding claims, ***characterized* in that** a catalyst is introduced into the reactor (28, 38) in the form of a salt dissolved in the water (24, 34) or in the form of solid particles distributed in the hydride (22, 32).

9. Hydrogen generating device according to Claim 8, ***characterized* in that** the element constituting the catalyst is selected from the group comprising cobalt (Co), ruthenium (Ru) and platinum (Pt), palladium (Pd), nickel (Ni), iron (Fe), gold (Au), silver (Ag), manganese (Mn), rhenium (Re), rhodium (Rh), titanium (Ti), vanadium (V) and cerium (Ce).

10. Hydrogen generating device according to one of Claims 1 to 9, ***characterized* in that** the reactor (28, 38) further comprises at least one orifice (29) that coincides with a line formed by the envelope (23) to convey the water (24) into the reactor (28).

11. Hydrogen generating device according to one of Claims 1 to 9, ***characterized* in that** the reactor (38) contains water (34), and **in that** the envelope (33) contains the hydride (32), the said envelope (33), before any use of the device, being mostly covered with a lining (39) made from a material that is dispersible but not soluble in the water (34), the combination of the lining (39) and the envelope (33) being immersed in the water (34).

12. Hydrogen generating device according to one of Claims 1 to 11, ***characterized* in that** the envelope (23, 33) has the shape of a cylinder or a cone, having a circular or polygonal base.

13. Hydrogen generating device according to one of Claims 1 to 12, ***characterized* in that** the envelope (23, 33) has an elongated and hollow shape, similar to a pipe.

14. Hydrogen generating device according to one of Claims 1 to 13, ***characterized* in that** it comprises a plurality of envelopes (23, 33) having similar or dissimilar geometries and distributed in the reactor (28, 38).

15. Fuel cell comprising an electrolyte, an anode and a cathode, whereof the oxidizer is oxygen (O₂), and the reducing agent is hydrogen (H₂) produced by hydrolysis, ***characterized* in that** it comprises a device (5) for generating hydrogen by hydrolysis of a hydride (22, 32) according to one of the preceding claims.

## Patentansprüche

1. Vorrichtung zur Erzeugung von Wasserstoff durch Hydrolyse eines Hydrids, umfassend:
- einen Reaktor (28, 38), der das Hydrid (22, 32) in fester Form, in zerkleinertem Zustand oder nicht, enthält und mindestens eine Öffnung (27, 37) umfasst, die für die Abfuhr des erzeugten Wasserstoffs bestimmt ist;
- Mittel zur Freisetzung des für die Hydrolysereaktion erforderlichen Wassers (24, 34);
- mindestens eine Hülle (23, 33), die in der Lage ist, das Hydrid (22, 32) von dem für die Hydrolysereaktion erforderlichen Wasser (24, 34) zu isolieren, wobei diese Hülle (23, 33) aus einem sich verbrauchenden Werkstoff gebildet ist;
**dadurch gekennzeichnet, dass** die lösliche oder dispergierbare Hülle (23, 33) das Wasser (24, 34) oder das Hydrid (22, 32) umgibt oder bedeckt und aus einem Werkstoff besteht, der durch die Produkte der Hydrolysereaktion verbraucht wird, so dass der Ort des In-Kontakt-Bringens zwischen dem Wasser (24, 34) und dem Hydrid (22, 32), der dieser Hydrolysereaktion als Sitz dienen kann, sich im Inneren des Reaktors (28, 38) im Maße des Verbrauchs des Werkstoffs verlagert.

2. Vorrichtung zur Erzeugung von Wasserstoff nach Anspruch 1, **dadurch gekennzeichnet, dass** das Hydrid (22, 32) aus der Gruppe ausgewählt ist, die Natriumtetrahydroborat NaBH₄, Magnesiumtetrahydroborat Mg(BH₄)₂, Lithiumtetrahydroborat LiBH₄, Aluminiumtetrahydroborat Al(BH₄)₃, Berylliumtetrahydroborat Be(BH₄)₂, Zirconiumtetrahydroborat Zr(BH₄)₃, Calciumtetrahydroborat Ca(BH₄)₂, Kaliumtetrahydroborat KBH₄ und die Hydride LiH, MgH₂, CaH₂, Ca(AlH₄)₂, NaAlH₄, LiAlH₄ umfasst.

3. Vorrichtung zur Erzeugung von Wasserstoff nach einem der Ansprüche 1 und 2, **dadurch gekennzeichnet, dass** der Werkstoff der Hülle (23, 33) ein metallischer Werkstoff ist, der in Gegenwart eines basischen Mediums korrodiert.

4. Vorrichtung zur Erzeugung von Wasserstoff nach einem der Ansprüche 1 und 2, **dadurch gekennzeichnet, dass** der Werkstoff der Hülle (23, 33) ein organischer Werkstoff ist, der in Gegenwart eines basischen Mediums abgebaut wird.

5. Vorrichtung zur Erzeugung von Wasserstoff nach Anspruch 4, **dadurch gekennzeichnet, dass** der organische Werkstoff aus der Gruppe ausgewählt ist, die die Polyamide, die Polycarbonate, PET (Polyethylenterephtalat), die Polyester, PVDF (Polyvinylidenfluorid), PBT (Polybutylterephtalat) umfasst.

6. Vorrichtung zur Erzeugung von Wasserstoff nach einem der vorhergehenden Ansprüche, **dadurch gekennzeichnet, dass** der Werkstoff der Hülle (23, 33) ein Werkstoff ist, dessen Auflösung unter der Wirkung der Produkte der Hydrolysereaktion ebenfalls Wasserstoff erzeugt.

7. Vorrichtung zur Erzeugung von Wasserstoff nach Anspruch 6, **dadurch gekennzeichnet, dass** der Werkstoff Aluminium oder eine Aluminiumlegierung ist.

8. Vorrichtung zur Erzeugung von Wasserstoff nach einem der vorhergehenden Ansprüche, **dadurch gekennzeichnet, dass** in den Reaktor (28, 38) ein Katalysator in Form eines in Wasser (24, 34) gelösten Salzes oder in Form von im Hydrid (22, 32) verteilten festen Teilchen eingeführt wird.

9. Vorrichtung zur Erzeugung von Wasserstoff nach Anspruch 8, **dadurch gekennzeichnet, dass** das den Katalysator bildende Element aus der Gruppe ausgewählt ist, die Cobalt (Co), Ruthenium (Ru) und Platin (Pt), Palladium (Pd), Nickel (Ni), Eisen (Fe), Gold (Au), Silber (Ag), Mangan (Mn), Rhenium (Re), Rhodium (RH), Titan (Ti), Vanadium (V) und Cer (Ce) umfasst.

10. Vorrichtung zur Erzeugung von Wasserstoff nach einem der Ansprüche 1 bis 9, **dadurch gekennzeichnet, dass** der Reaktor (28, 38) außerdem mindestens eine Öffnung (29) umfasst, die mit einer von der Hülle (23) gebildeten Leitung zusammenfällt, so dass das Wasser (24) in das Innere des Reaktors (28) geleitet wird.

11. Vorrichtung zur Erzeugung von Wasserstoff nach einem der Ansprüche 1 bis 9, **dadurch gekennzeichnet, dass** der Reaktor (38) Wasser (34) enthält, dass die Hülle (33) das Hydrid (32) enthält, wobei die Hülle (33) vor jeder Verwendung der Vorrichtung überwiegend mit einem Mantel (39) bedeckt ist, der aus einem im Wasser (34) dispergierbaren aber nicht löslichen Werkstoff hergestellt ist, wobei die aus dem Mantel (39) und aus der Hülle (33) bestehende Einheit in das Wasser (34) eingetaucht ist.

12. Vorrichtung zur Erzeugung von Wasserstoff nach einem der Ansprüche 1 bis 11, **dadurch gekennzeichnet, dass** die Hülle (23, 33) in Form eines Zylinders oder Kegels mit kreisförmiger oder vieleckiger Grundfläche ist.

13. Vorrichtung zur Erzeugung von Wasserstoff nach einem der Ansprüche 1 bis 12, **dadurch gekennzeichnet, dass** die Hülle (23, 33) eine langgestreckte und hohle Form nach der Art einer Leitung aufweist.

14. Vorrichtung zur Erzeugung von Wasserstoff nach einem der Ansprüche 1 bis 13, **dadurch gekennzeichnet, dass** sie eine Mehrzahl von Hüllen (23, 33) umfasst, die ähnliche Geometrien oder nicht aufweisen und in dem Reaktor (28, 38) verteilt sind.

15. Brennstoffzelle, umfassend einen Elektrolyt, eine Anode und eine Kathode, deren Oxidationsmittel Sauerstoff (O₂) ist und deren Reduzierungsmittel durch Hydrolyse erzeugter Wasserstoff (H₂) ist, **dadurch gekennzeichnet, dass** sie eine Vorrichtung (5) zur Erzeugung von Wasserstoff durch Hydrolyse eines Hydrids (22, 32) nach einem der vorhergehenden Ansprüche umfasst.
